(19) Europäisches Patentamt
European Patent Office
Office européen des brevets

(11) **EP 0 535 349 B1**

(12) **EUROPÄISCHE PATENTSCHRIFT**

(45) Veröffentlichungstag und Bekanntmachung des Hinweises auf die Patenterteilung:
**19.03.1997 Patentblatt 1997/12**

(51) Int. Cl.$^6$: **B60K 28/16**

(21) Anmeldenummer: **92114112.3**

(22) Anmeldetag: **19.08.1992**

(54) **Verfahren zur Antriebsschlupfregelung**

Process for controlling drive slip

Procédé de régulation du glissement à l'entraînement

(84) Benannte Vertragsstaaten:
**DE GB SE**

(30) Priorität: **30.09.1991 DE 4132490**

(43) Veröffentlichungstag der Anmeldung:
**07.04.1993 Patentblatt 1993/14**

(73) Patentinhaber: **ROBERT BOSCH GMBH**
**70442 Stuttgart (DE)**

(72) Erfinder:
• **Schmitt, Johannes, Dipl.-Ing.**
**W-7145 Markgröningen (DE)**
• **Rupp, Peter, Dipl.-Ing.**
**W-7141 Steinheim/Murr (DE)**

(56) Entgegenhaltungen:
**DE-A- 2 257 658        DE-A- 3 709 157**
**DE-A- 3 829 903**

• **PATENT ABSTRACTS OF JAPAN vol. 6, no. 76 (M-128)(954) 13. Mai 1982 & JP-A-57 15 051 ( AKEBONO BRAKE KOGYO K.K. ) 26.01.1982**

Anmerkung:    Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Stand der Technik

Aufgrund von Einstreuungen, Bremsenquietschen, Impulsradzucken durch Differentialübersprechen, Antriebsstrangschwingungen werden bei Antriebsschlupfregelsystemen vermeintlich plausible Geschwindigkeiten sensiert, die nicht der tatsächlichen Geschwindigkeit der angetriebenen Räder eines Kraftfahrzeuges entsprechen. Die Mittlung der Radgeschwindigkeiten über mehrere Rechenzyklen und/oder eine konstante Anstiegsbegrenzung sind die bisher eingesetzten Methoden zur Unterdrückung dieser Fehlereinflüsse.

In der Zusammenfassung der JP-A 57-15051 wird eine Filterung eines die Antriebsschlupfregelung auslösenden Radgeschwindigkeitssignals beschrieben, bei welchen die Anstiegsgeschwindigkeit des Geschwindigkeitssignals auf einen konstanten Wert begrenzt wird. Die Begrenzung auf einen konstanten Wert verhindert nicht in allen Fällen eine unnötige Antriebsschlupfregelung.

Es ist daher Aufgabe der Erfindung, eine unnötige Antriebsschlupfregelung zu verhindern bzw. den Regelkomfort und die Traktion des Fahrzeugs weiter zu erhöhen.

Dies wird durch die kennzeichnenden Merkmale des unabhängigen Patentanspruchs erreicht.

Vorteile der Erfindung

Eine aus dem Motordrehzahlgradient berechnete Geschwindigkeitsdifferenz dient bei der Erfindung als variable und plausible Anstieasbegrenzung einer herkömmlich berechneten Geschwindigkeit eines angetriebenen Rades, wie diese bei ABS und ASR gewonnen werden.

Die Anstiegsbegrenzung kann weiter variiert werden, in Abhängigkeit von

a) dem eingelegten Gang bzw. gewählt Gang bei Automatikgetriebe
b) dem Rad, welches schneller dreht. Diesem Rad wird eine berechenbare geringere Begrenzung zugeordnet, als dem anderen Rad.
c) einem Kupplungssignal, das proportional zum Kupplungsweg ist.
d) dem Kupplungsschalter

Durch die Erfindung wird eine unnötige ASR verhindert, bzw. der Regelkomfort und die Traktion des Fahrzeugs erhöht.

Die Erkennung einer $\mu$-Split-Fahrbahn und damit die Umschaltung auf "select high" - Regelmodus wird verbessert.

Figurenbeschreibung

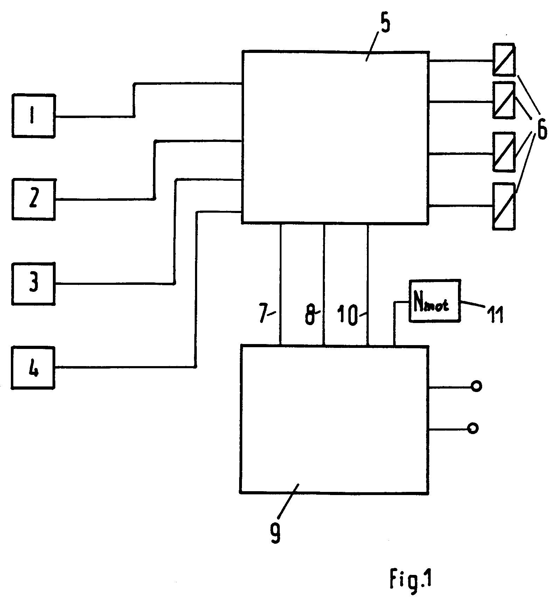

In Fig. 1 ist in Blockschaltbilddarstellung ein Ausführungsbeispiel einer kombinierten ABS/ASR-Anlage gezeigt. Vier den vier Rädern eines Kraftfahrzeugs zugeordnete Geschwindigkeitssensoren sind mit 1 bis 4 bezeichnet. Deren Signale werden einem ABS-Steuergerät 5 zugeführt, das aus diesen Signalen Bremsdrucksteuersignale für die Magnetventile 6 erzeugt. Das Steuergerät 5 erzeugt zur Bremsschlupfermittlung gefilterte Radgeschwindigkeitssignale, die eine konstante Anstiegsbegrenzung aufweisen, d.h. es ist eine maximale Steigung des Radgeschwindigkeitsanstiegs vorgegeben, die z.B. 50 g sein kann. Diese Radgeschwindigkeiten VABS links und VABS rechts der angetriebenen Räder werden auch über Leitungen 7 und 8 zum Steuergerät 9 für ein ASR gegeben. Außerdem ermittelt das Steuergerät 5 ein Refernzgeschwindigkeitssignal aus den Radgeschwindigkeitssignalen der nicht angetriebenen Räder, das über eine Leitung 10 dem Steuergerät 9 als Fahrzeuggeschwindigkeit für die Schlupfbildung im ASR-Fall zugeführt wird. Diese Geschwindigkeitssignale stehen immer bei einem fahrenden Fahrzeug an. Ein Motordrehzahlmesser 11 liefert die Motordrehzahl $N_{mot}$.

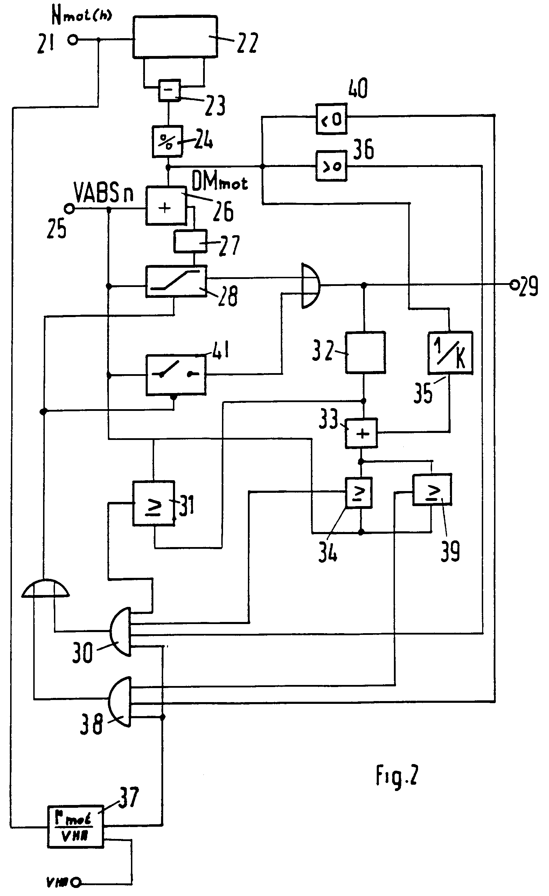

Teil des Steuergerätes 9 ist das in Form eines Blockschaltbildes dargestellte Ausführungsbeispiel der Fig. 2, wobei hier nur die Anordnung zur Bildung eines VASR-Signales dargestellt ist.

An einer Klemme 21 wird die Motordrehzahl $N_{mot}$ zugeführt, die zu einem Schieberegister 22 mit z.B. 8 Speicherplätzen geführt wird. Hierin sind jeweils die acht zuletzt gemessenen $N_{mot}$-Werte gespeichert. Ein Subtrahierglied 23 bildet

$$N_{mot(n)} - N_{mot}(n-8).$$

Dieser Wert wird in einem Dividierer 24 durch 8 dividiert. Das Ergebnis ist die Steigung des Motordrehzahlverlaufs:

$$DN_{mot} = \frac{N_{mot(n)} - N_{mot}(n-8)}{8}$$

An einer Klemme 25 (entspricht z.B. Leitung 7) wird das VABS(n) zugeführt, zu dem im kombinierten Addierer/Dividierer 26 das Signal $DN_{mot}/K$ addiert wird. K ist eine Konstante und z.B. 60, so daß sich der Wert $DN_{mot}/K$ in km/h ergibt.

Das Ergebnis der Addition ist der Wert, um den sich der Radgeschwindigkeitswert VABS bei der nächsten Messung maximal erhöhen darf. Dieser Begrenzungswert ist jeweils in einem Speicher 27 zwischengespeichert und steht bei der nächsten Messung als Begrenzungswert für einen Begrenzer 28 zur Verfügung. Dies bedeutet, daß unter der Voraussetzung, daß der Begrenzer 28 wirksam ist, VABS(n) den Begrenzer 28 unbeeinflußt passiert, solange der neue Wert VABS(n) kleiner VASR(n-1) + $DM_{mot}/K$ ist, jedoch wenn er größer ist auf den Begrenzungswert begrenzt wird. Das Ausgangssignal des Begrenzers 28 bildet im Falle, daß der Begrenzer wirksam ist, den gültigen VASR-Wert und steht an einer Klemme 29 zur Verarbeitung an. Der Begrenzer 28 ist wirksam, wenn eine der folgenden Bedingungen erfüllt sind:

1) $(VABS(n) \geq VASR(n-1))$ ^ $DN_{mot} > 0$ ^ $(VABS(n) \geq (VASR(N-1) + DN_{mot}/K$ und zusätzlich der erste Gang einge legt ist.

2) $(DN_{mot} < 0)$ ^$(VABS(n) < VASR(n-1) + DN_{mot}/K$ und der 1. Gang einglegt ist.

Die Bedingung 1 wird durch ein Und-Gatter 30 erfüllt: Dieses gibt ein Signal ab, wenn a) ein Vergleicher 31 ein Signal abgibt (VABS(n) größer (oder gleich) als die in einem Zwischenspeicher 32 abgelegte Größe VASR (n-1), b) VABS(n) größer (oder gleich) $VASR(n-1) + DN_{mot}/K$ ist (Speicher 32, Addierer 33, Vergleicher 34, Dividierer 35), c) $DN_{mot} > 0$ ist (Vergleicher 36) und der erste Gang eingelegt ist (Dividierer/Vergleicher 37, der $N_{mot}$ durch die mittlere Hinterachsgeschwindigkeit $V_{HA}$ dividiert und ein Signal abgibt, wenn diese größer als eine vorgegebene Größe, z.B. 75 ist).

Die zweite Bedingung wird durch ein Und-Gatter 38 erfüllt: Dieses gibt ein Ausgangssignal ab, wenn die Summe am Ausgang des Addierers 33 $(VASR(n-1) + DN_{mot}/K$ kleiner oder gleich VABS(n) ist (Vergleicher 39) und $DN_{mot} > 0$ ist (Vergleicher 40) ist und ebenfalls der erste Gang eingelegt ist.

Ein Signal am Ausgang eines der Und-Gatter 30 und 38 aktiviert den Begrenzer 28 und blockiert einen Block 41. Andererseits wird der Begrenzer 28 blockiert und der Block 41 durchlässig, wenn keines der Und-Gatter 30 und 38 ein Ausgangssignal liefert. In diesem Fall bildet VABS(n) das ASR Radgeschwidigkeitssignal, das dann an Klemme 29 ansteht.

Beim Vorzeichenwechsel von $DN_{mot}$ springt VASR auf BABS, wobei die Springhöhe entsprechend der aufgelaufener Differenz ist. Es darf aber nur dann gesprungen werden, wenn:

$$VASR < \frac{N_{mot}}{K},$$

und zwar auf:

$$VASR(n) = \frac{N_{mot}}{K} \text{ (dies gilt bei + nach -)}$$

und

$$VASR > \frac{N_{mot}}{K},$$

$$VASR(n) = \frac{N_{mot}}{K} \text{ (dies gilt bei + nach -)}$$

Die $DN_{mot}$ - Abfrage weist vorzugsweise eine Hysterese auf.

**Patentansprüche**

1. Verfahren zur Antriebsschlupfregelung für ein Kraftfahrzeug, wobei ein für die Antriebsschlupfregelung oder andere geregelte Systeme genutztes Geschwindigkeitssignal der angetriebenen Räder einer Anstiegsbegrenzung unterworfen ist, dadurch gekennzeichnet, daß die Drehzahl des Antriebsmotors des Kraftfahrzeugs erfaßt wird, die Änderung dieser Drehzahl ermittelt wird und der Anstieg des Geschwindigkeitssignals der angetriebenen Räder abhängig von der Änderung der Motordrehzahl begrenzt wird.

2. Verfahren nach Anspruch 1, dadurch gekennzeichnet, daß die Anstiegsbegrenzung teilweise konstant und teilweise variabel ist.

3. Verfahren nach Anspruch 2, wobei noch ein ABS vorgesehen ist, dadurch gekennzeichnet, daß die variable Anstiegsbegrenzung unter folgender Bedingung gültig ist: vorausgesetzt es wird im ersten Gang gefahren muß die für das ABS zum Zeitpunkt n gewonnene Geschwindigkeit eines angetriebenen Rads (VABS(n)) größer und eventuell gleich der zum Zeitpunkt (n-1) ermittelten Geschwindigkeit der angetriebenen Räder für die Antriebsschlupfregelung VASR (n-1) sein und es muß die Änderung der Motordrehzahl $N_{mot}$ größer 0 sein und es muß VABS(n) größer oder eventuell gleich VASR(n-1) + DN$_{mot}$/K sein, wobei DN$_{mot}$ die Änderung der Motordrehzahln $N_{mot}$ und K eine Konstante (z.b. 60) ist.

4. Verfahren nach Anspruch 3, dadurch gekennzeichnet, daß zusätzlich noch die variable Anstiegsbegrenzung auch dann gültig ist, wenn, vorausgesetzt es wird im ersten Gang gefahren, die Änderung der Motordrehzahl negativ ist, und VABS(n) < VASR(n-1= + DN$_{mot}$/K ist.

5. Verfahren nach einem der Ansprüche 2 bis 4, dadurch gekennzeichnet, daß im Falle der konstanten Anstiegsbegrenzung VASR(n) = (VABS(n) ist.

6. Verfahren nach einem der Ansprüche 1 bis 5, dadurch gekennzeichnet, daß der eingelegte Gang bzw. die gewählte Gangstufe eines Automatikgetriebes berücksichtigt wird.

7. Verfahren nach einem der Ansprüche 1 bis 6, dadurch gekennzeichnet, daß dem angetriebenen Rad einer Achse, das schneller dreht, eine um einen vorgegebenen Wert oder Prozentsatz kleinere Anstiegsbegrenzung zugeordnet wird als dem anderen.

8. Verfahren nach einer, der Ansprüche 1 bis 7, dadurch gekennzeichnet, daß der Kupplungsschlupf berücksichtigt wird.

9. Verfahren nach einem der Ansprüche 1 bis 5, dadurch gekennzeichnet, daß der Wandlerschlupf (Wandlerkennlinie) eines Automatikgetriebe berücksichtigt wird.

10. Verfahren nach einem der Ansprüche 3 bis 9, dadurch gekennzeichnet, daß beim Wechsel von VABS(n) zu

$$VASR(n\text{-}1)+\frac{DN_{mot}}{K}$$

und umgekehrt, eine konstante Anstiegsbegrenzung (z.B. $\frac{2\ km/h}{10\ ms}$) wirksam ist.

11. Verfahren nach Anspruch 10, dadurch gekennzeichnet, daß beim Wechsel der Anstiegsbegrenzung VASR(n) maximal

$$\frac{N_{mot}}{K}$$

werden kann.

**Claims**

1. Process for traction-slip control for a motor vehicle, a speed signal of the driven wheels which is used for the traction-slip control or for other controlled systems being subjected to increase limitation, characterized in that the rotational speed of the drive engine of the motor vehicle is detected, the change in this rotational speed is determined and the increase in the speed signal of the driven wheels is limited as a function of the change in the engine speed.

2. Process according to Claim 1, characterized in that the increase limitation is partially constant and partially variable.

3. Process according to Claim 2, an ABS system being provided in addition, characterized in that the variable increase limitation is valid under the following condition: provided the vehicle is driven in the first gear, the speed of a driven wheel (VABS(n)) which is acquired for the ABS system at the time n must be higher than, and possibly identical to, the speed of the driven wheels which is determined at the time (n-1), for the traction-slip control VASR (n-1), and the change in the engine speed $N_{mot}$ must be greater than 0 and VABS(n) must be higher than, or possibly equal to, VASR (n-1) + $DN_{mot}/K$, $DN_{mot}$ being the change in the engine speed $N_{mot}$ and K being a constant (e.g. 60).

4. Process according to Claim 3, characterized in that, in addition, the variable increase limitation is valid even if, assuming the vehicle is being driven in the first gear, the change in the engine speed is negative and VABS(n) < VASR (n-1) = + $DN_{mot}/K$.

5. Process according to one of Claims 2 to 4, characterized in that VASR (n) = VABS (n) in the case of constant increase limitation.

6. Process according to one of Claims 1 to 5, characterized in that the gear which has been engaged or the selected gear stage of an automatic gearbox is taken into account.

7. Process according to one of Claims 1 to 6, characterized in that that driven wheel of an axle which is rotating more quickly is assigned an increase limitation which is smaller than that of the other wheel by a prescribed value or percentage.

8. Process according to one of Claims 1 to 7, characterized in that the clutch slip is taken into account.

9. Process according to one of Claims 1 to 5, characterized in that the torque converter slip (torque converter characteristic curve) of an automatic gearbox is taken into account.

10. Process according to one of Claims 3 to 9, characterized in that a constant increase limitation (e.g. $\frac{2 \text{ km/h}}{10 \text{ ms}}$) is effective at the change-over from VABS(n) to

$$VASR (n\text{-}1) + \frac{DN_{mot}}{K},$$

and vice versa.

11. Process according to Claim 10, characterized in that VASR(n) can at maximum become

$$\frac{N_{mot}}{K}$$

at the change-over of the increase limitation.

## Revendications

1. Procédé de régulation du patinage à l'entraînement d'un véhicule automobile selon lequel un signal de vitesse utilisé pour la régulation du patinage à l'entraînement ou d'autres systèmes régulés des roues motrices est soumis à une limitation de croissance,
caractérisé en ce qu'
on détecte la vitesse de rotation du moteur du véhicule, on détermine la variation de cette vitesse de rotation et on limite la croissance du signal de vitesse des roues motrices en fonction de la variation de la vitesse de rotation du moteur.

2. Procédé selon la revendication 1,
caractérisé en ce que
la limitation de croissance est partiellement constante et partiellement variable.

3. Procédé selon la revendication 2 avec en plus un système ABS,
caractérisé en ce que
la limitation de la croissance variable est valable à la condition suivante : si l'on circule avec le premier rapport de vitesse, il faut que la vitesse obtenue à l'instant n pour le système ABS pour une roue motrice (VABS(n)) soit supérieure ou éventuellement égale à la vitesse des roues motrices obtenue à l'instant (n-1) pour la régulation du patinage à l'entraînement VASR(n-1), et il faut que la variation de la vitesse de rotation du moteur $N_{mot}$ soit supérieure à 0 et que VABS(n) soit supérieur ou éventuellement égal à VASR(n-1) + DN $_{mot}$/K , cette grandeur $DN_{mot}$ étant la variation de la vitesse de rotation du moteur $N_{mot}$ et K étant une constante (par exemple égale à 60).

4. Procédé selon la revendication 3,
caractérisé en ce qu'
en plus, la limitation de croissance variable s'applique également si, dans l'hypothèse où l'on circule avec le premier rapport de vitesse, la variation de la vitesse de rotation du moteur est négative et l'on a VABS(n) < VASR(n-1) = + DN $_{mot}$/K .

5. Procédé selon l'une des revendications 2 à 4,
caractérisé en ce que
dans le cas de la limitation constante de la croissance, on a VASR(n) = (VABS (n)) .

6. Procédé selon l'une des revendications 1 à 5,
caractérisé en ce qu'
on tient compte du rapport utilisé ou du rapport choisi d'une boîte de vitesses automatique.

7. Procédé selon l'une des revendications 1 à 6,
caractérisé en ce que
pour la roue motrice d'un essieu qui tourne plus rapidement, on attribue une limitation de croissance plus petite, diminuée d'une valeur prédéterminée ou d'un pourcentage, que pour l'autre roue.

8. Procédé selon l'une des revendications 1 à 7,
caractérisé en ce qu'
on tient compte du patinage de l'embrayage.

9. Procédé selon l'une des revendications 1 à 5,
caractérisé en ce qu'
on tient compte du patinage du convertisseur (courbe caractéristique du convertisseur) d'une boîte de vitesses automatique.

10. Procédé selon l'une des revendications 3 à 9,
caractérisé en ce que
lorsqu'on change de VABS(n) à

$$VASR(N - 1) + \frac{DN_{mot}}{K}$$

et inversement, on applique une limitation constante de la croissance (par exemple $\frac{2 \ km/h}{10 \ ms}$ ).

11. Procédé selon la revendication 10,
caractérisé en ce que
lorsqu'on change la limitation de croissance, VASR(n) peut au maximum atteindre la valeur

$$\frac{N_{mot}}{K} \cdot$$

Fig.1

Fig.2